# DEMANDE DE BREVET EUROPEEN

(11) **EP 0 679 612 A1**
(43) Date de publication de la demande: **02.11.1995**
(21) Numéro de dépôt: 95400926.2
(22) Date de dépôt: 25.04.1995
(51) Int. Cl.: C02F 11/08, C02F 3/28

(54) **Installation pour le traitement de déchets hétérogènes par oxydation en voie humide mise en oeuvre au moyen d'un autoclave**

(30) Priorité: 26.04.1994 FR 9405005
(71) Demandeur: COMMISSARIAT A L'ENERGIE ATOMIQUE, F-75015 Paris (FR); CENTRE EUROPEEN D'ETUDES, DE RECHERCHES ET DE TRANSFERTS SUR L'ENVIRONNEMENT, F-04105 Manosque (FR)
(72) Inventeur: Lessart, Pierre, F-04130 Volx (FR); Faugeras, Pierre, F-30130 Pont Saint Esprit (FR); Guichard, Jean-Roger, F-03440 Chavenon (FR)
(74) Mandataire: Dubois-Chabert, Guy

(57) **Abrégé**

L'invention concerne un autoclave pour le traitement de déchets hétérogènes en voie humide assistée par un catalyseur et une installation de traitement équipé de cet autoclave. L'autoclave (1) est équipé d'un panier amovible (4) de réception des déchets qui possède une porosité permettant la retenue des produits solides inertes et des matières solides non oxydables et le passage de la composante liquide. Il possède également un dispositif (5, 6) pour y installer et y maintenir un catalyseur d'oxydation.

## Description

La présente invention se rapporte à une installation pour le traitement de déchets hétérogènes par oxydation en voie humide. Elle permet l'utilisation de catalyseurs hétérogènes lors de l'oxydation par voie humide de déchets hétérogènes comportant notamment des solides.

L'oxydation par voie humide est un procédé propre qui permet de détruire des matières oxydables, c'est-à-dire en générant un minimum de composés chimiques secondaires éventuellement polluants. C'est une méthode utilisée pour traiter des effluents trop dilués pour l'incinération, ou réfractaires aux traitement chimiques ou biologiques. Les oxydants utilisés peuvent être l'oxygène de l'air, mais aussi l'eau oxygénée, ou de l'air enrichi en oxygène. Des catalyseurs d'oxydation divers peuvent être utilisés, par exemple des ions métalliques, des métaux, des composés oxygénés à oxygène inactif ou à oxygène actif. Ces catalyseurs doivent être régénérés en permanence (en continu) dans le dispositif d'oxydation. L'oxygène servant à l'oxydation des matières oxydables est en général suffisant pour assurer cette régénération. Schématiquement, cette décomposition des matières oxydables peut être considérée comme la succession de deux opérations unitaires, qui peuvent être en partie simultanées, conduisant essentiellement pour la première à la formation intermédiaire d'acides organiques, chlorures et sulfates, et pour la seconde en la décomposition de ces acides organiques en gaz carbonique et eau.

Pour améliorer l'opération d'oxydation, il est avantageux d'utiliser un catalyseur. Généralement on utilise un sel de cuivre. Cependant, le cuivre est un polluant de l'environnement. D'autres catalyseurs utilisables, à base de métaux lourds, sont également des polluants. Lorsqu'un catalyseur est utilisé, il convient de le séparer des produits de dégradation (en solution ou gazeux selon les conditions opératoires) et des résidus solides non oxydables ou difficilement oxydables (déchets métalliques, céramiques, autres produits inertes, sels insolubles).

Des procédés connus de traitement des déchets par oxydation en voie humide, tels le procédé WETOX ou le procédé VERTES, ne s'appliquent qu'à des déchets pompables. On ne peut donc pas les utiliser pour le traitement de déchets contenant des solides.

Un but de la présente invention est de proposer une installation permettant le traitement de déchets contenant des solides. Ceci est obtenu par l'utilisation d'un panier amovible.

Un autre but de la présente invention est de réaliser la séparation facile entre le catalyseur et les déchets. On arrive à ce résultat grâce à une mise en forme originale du catalyseur.

Encore un autre but de la présente invention est de pouvoir réaliser facilement la séparation des produits non oxydables des autres produits obtenus par l'utilisation d'un panier à mailles suffisamment fines pour les récupérer.

Enfin, un autre but de la présente invention est de proposer une nouvelle installation pour le traitement de déchets hétérogènes par oxydation en voie humide.

L'invention a donc pour objet un autoclave pour le traitement de déchets hétérogènes par oxydation en voie humide assistée par un catalyseur, l'autoclave comportant :
- un récipient à fermeture hermétique pour réaliser sous pression une réaction d'oxydation,
- des moyens d'introduction des déchets dans le récipient,
- des moyens d'introduction d'un agent oxydant dans le récipient,
- des moyens de chauffage du contenu du récipient,
- des moyens d'évacuation des gaz ayant réagi,
- des moyens de prélèvement de la composante liquide générée dans le récipient lors du traitement, caractérisé en ce que :
- les moyens d'introduction des déchets sont constitués par un panier amovible de réception des déchets logeable dans la partie haute du récipient, le panier possédant une porosité permettant la rétention des produits solides inertes et des matières solides non oxydables et permettant le passage de la composante liquide,
- des moyens sont prévus dans le récipient pour y installer et y maintenir le catalyseur d'oxydation,
- les moyens d'introduction de l'agent oxydant sont situés dans la partie basse du récipient.

L'autoclave peut comprendre en outre des moyens permettant de réinjecter, en partie haute de l'autoclave, la composante liquide soutirée grâce auxdits moyens de prélèvement.

Le panier est de préférence constitué d'un réseau maillé.

Avantageusement, les moyens d'installation et de maintien du catalyseur sont constitués d'un support solide poreux sur lequel est déposé le catalyseur, ce support étant disposé sous le panier.

L'invention a aussi pour objet une installation pour le traitement de déchets hétérogènes par oxydation en voie humide, comprenant un autoclave tel que défini ci-dessus et des moyens pour maintenir ladite pression dans le récipient.

L'autoclave peut constituer le seul réacteur d'oxydation de l'installation. Il fonctionne alors à température et pression modérées.

L'oxydation peut être menée en deux étapes successives conduites dans deux réacteurs différents, le premier étant l'autoclave fonctionnant à température et pression modérées, le second fonctionnant à haute pression et haute température et assurant l'oxydation totale des matières organiques.

L'oxydation peut encore être menée en deux étapes successives, la première étant menée dans l'autoclave sous des conditions de température et de pression modérées, la seconde permettant la destruction des acides organiques produits lors de la première étape dans un digesteur thermophile produisant du biogaz.

L'invention sera mieux comprise et d'autres particularités et avantages apparaîtront à la lecture de la description qui va suivre, donnée à titre d'exemple non limitatif, accompagnée des dessins annexés parmi lesquels :
- la figure **1** représente schématiquement une installation selon l'invention pour le traitement de déchets hétérogènes par oxydation en voie humide utilisant un seul réacteur d'oxydation constitué par un autoclave à panier et catalyseur séparé ;
- la figure **2** représente schématiquement une installation selon l'invention comprenant un premier réacteur d'oxydation constitué par un autoclave à panier et catalyseur séparé, et un second réacteur fonctionnant à température et pression plus élevées ;
- la figure **3** représente schématiquement une installation selon l'invention comprenant un réacteur d'oxydation constitué par un autoclave à panier et catalyseur séparé suivi d'un digesteur.

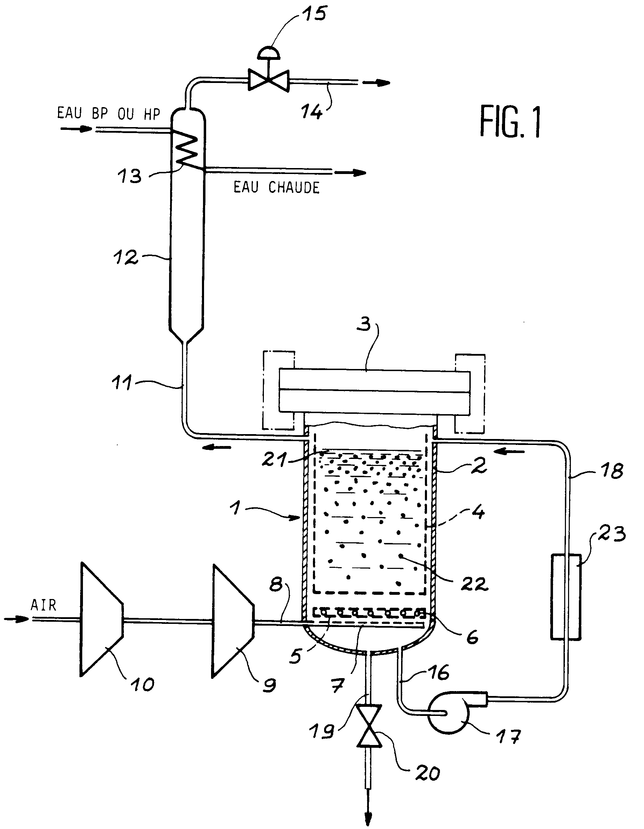

L'installation pour le traitement des déchets représentée à la figure 1 comprend un autoclave 1 comportant un récipient 2 qui peut être fermé par un couvercle 3. Le récipient 2 est conçu pour recevoir en partie haute un panier 4. Ce panier peut être accroché au-dessous du couvercle 3 ou reposer sur des bossages internes du récipient 2. Le panier est prévu pour recevoir la charge de déchets à traiter. Il peut être constitué d'un réseau maillé dont les mailles résultent d'un compromis entre solidité, aptitude à retenir les matières inertes et les matières non oxydables (ce qui implique des mailles de petites dimensions) et porosité suffisamment grande pour laisser la partie liquide circuler le plus librement possible (ce qui implique des mailles de grandes dimensions). A titre d'exemple, des mailles de 1 mm constituent un bon compromis.

Le récipient 2 contient encore, sous le panier 4, un dispositif 5 fixé au récipient et destiné à recevoir et à retenir des éléments supports sur lesquels est déposé un catalyseur d'oxydation. Ce dispositif 5 ne doit pas gêner la circulation de la partie liquide contenue dans le récipient. Il peut être constitué d'un panier grillagé retenant le support de catalyseur par exemple si ce support est constitué de billes poreuses telles les billes 6. Le dispositif 5 peut encore être constitué d'éléments de fixation rattachés au récipient 2 sur lesquels on fixe les supports poreux de catalyseur si ceux-ci sont des plaques, des tubes ou des barres.

Le catalyseur est donc disposé en partie basse de l'autoclave, au-dessous du panier 4 contenant les déchets à oxyder, dans la zone de dispersion de l'oxygène, ce qui permet sa régénération continue. A titre d'exemple, l'un des catalyseurs préconisés est l'oxyde de vanadium V₂O₅.

Les dimensions du support poreux résultent également d'un compromis. Le catalyseur ne doit pas être entraîné par le gaz (ce qui implique un support de dimensions suffisamment grandes) et il doit présenter une surface maximum. Dans le cas de billes, le diamètre est choisi de préférence de 1 à quelques millimètres.

L'autoclave 1 comporte aussi un dispositif 7 d'injection et de répartition d'air en partie basse, au-dessus de la zone où est disposé le catalyseur. Ce dispositif 7 peut être constitué d'un tube percé de trous le long d'une génératrice, les trous étant dirigés vers le panier 4. Il est fixé au récipient 2 et connecté à un tube 8 d'alimentation en air. L'air est utilisé comme agent oxydant. D'autres agents oxydants peuvent bien sûr être utilisés. De l'oxygène peut aussi être employé pour enrichir l'air injecté.

L'air peut être injecté par un ou plusieurs compresseurs électriques ou mécaniques. Le compresseur 9 assure le maintien de la pression désirée dans l'autoclave. Il peut être précédé d'un compresseur basse pression 10 fonctionnant par récupération de l'énergie de détente des gaz ayant réagi dans l'autoclave.

Les gaz ayant réagi sont dirigés par une conduite 11 connectée sur le récipient, sous le couvercle, vers un dispositif de lavage des gaz 12 équipé d'un condenseur 13 en partie haute. On provoque ainsi la condensation de la vapeur d'eau entraînée par les gaz et on relâche alors dans l'atmosphère essentiellement de l'azote, de l'oxygène et du gaz carbonique.

On injecte dans le condenseur 13 de l'eau à basse pression (BP) ou haute pression (HP). Cette eau en ressort chaude et peut être utilisée pour préchauffer l'air alimentant le dispositif 7 ou pour d'autres utilisations.

L'échappement des gaz hors du dispositif de lavage 12 peut se faire par une conduite 14, pourvue d'une vanne 15, dirigeant ces gaz vers le compresseur basse pression 10 pour le faire fonctionner.

De préférence, l'installation comprend un circuit permettant de prélever du liquide en partie basse de l'autoclave pour le réinjecter en partie haute. La conduite 16 branchée sur le fond du récipient 2 alimente une pompe 17 qui refoule le liquide en partie haute par une conduite 18. On augmente ainsi le renouvellement du liquide autour de la matière solide ce qui accélère la réaction de liquéfaction des déchets.

Cette disposition permet de réaliser le chauffage de l'autoclave en disposant un appareil de chauffe 23 autour de la conduite 18 pour y chauffer le liquide en circulation.

Le fond du récipient 2 est équipé d'une conduite 19 pourvue d'une vanne 20 permettant la purge du liquide en fin de réaction en autoclave. Elle permet le transfert du liquide, après décantation ou filtration (ou tout autre méthode d'élimination des solides en suspension), vers le rejet.

L'autoclave est en outre équipé de divers appareillages servant au contrôle des paramètres de fonctionnement (température, pression, etc) et de sécurité (soupape et disque d'éclatement).

L'oxydation des matières oxydables est conduite en deux temps. Dans une première étape, les déchets solides ou pâteux déposés dans le panier amovible sont oxydés à une température comprise entre 250°C et 300°C, sous une pression comprise entre 40 et 90 bars, pour être transformés en acides organiques solubles. Dans une deuxième étape, les acides organiques sont totalement oxydés.

On va maintenant décrire le mode opératoire de l'installation représentée à la figure 1.

Le panier 4 est chargé avec les déchets à traiter et, éventuellement une base sous forme solide qui permet d'ajuster le pH du milieu. On peut utiliser comme base Ca(OH)₂, NaOH, CaCO₃, Na₂CO₃, etc. Un avantage à utiliser une base peu soluble est que, initialement, le milieu n'est pas trop alcalin et que la base se dissout au fur et à mesure de la production d'acide dans le milieu et est immédiatement consommée. Cette base neutralise les divers acides produits dont l'acide chlorhydrique qui, comme dans les autres procédés d'oxydation en voie humide, peut se former à partir de certains composés organochlorés tels les polychlorures de vinyle par exemple.

Le panier est mis en place dans l'autoclave dont le récipient contient une certaine quantité d'eau 21 dans laquelle on a éventuellement dissous une base. La quantité d'eau est calculée de façon à noyer complètement les déchets 22 contenus dans le panier 4.

Après fermeture de l'autoclave, on commence à le pressuriser avec de l'air enrichi ou non en oxygène grâce aux compresseurs 9 et 10.

La pompe 17 est mise en route ainsi que l'appareil de chauffe 23, ce qui provoque l'initiation des réactions d'oxydation. Le dispositif de lavage des gaz 12 est également mis en fonction.

L'air injecté fournit un apport continu en oxygène pour assurer l'oxydation des matières oxydables, ce qui maintient ou élève la température de l'autoclave grâce à l'énergie dégagée par la chaleur de réaction.

La température et la pression à l'intérieur de l'autoclave sont maintenues à des valeurs déterminées pendant une durée déterminée, par exemple une température de 280°C et une pression de 70 bars pendant 1 heure.

Après l'arrêt de l'autoclave, la vanne 20 est ouverte pour transférer le liquide contenu dans le récipient. L'autoclave est ouvert et le panier est enlevé pour en vider les déchets non oxydables et recommencer un nouveau cycle de traitement.

Pendant toutes ces étapes, le catalyseur reste en place et est régénéré en continu grâce à l'alimentation en air enrichi ou non en oxygène. Le liquide est recyclé en permanence grâce à la pompe le prélevant en partie basse et le rejetant au-dessus des matières à oxyder.

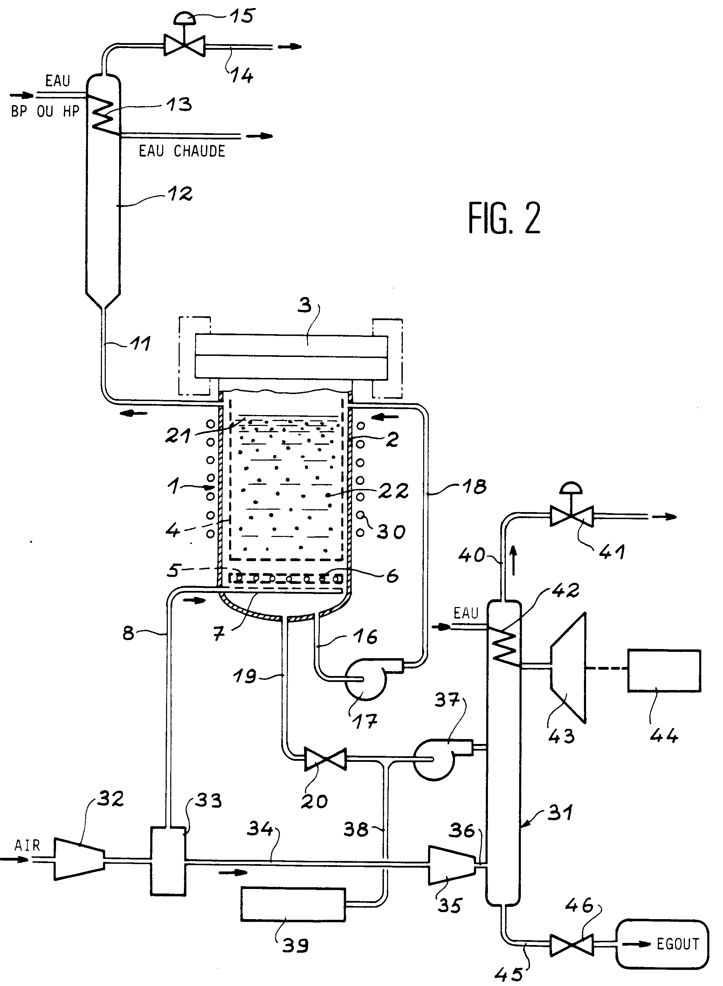

Dans l'installation représentée à la figure 2, l'oxydation se fait en deux étapes dans des réacteurs différents. Le premier, constitué par l'autoclave décrit à la figure 1, fonctionne à température et pression modérées. Le second fonctionne à température et pression élevées.

Dans la figure 2, les mêmes références qu'à la figure 1 représentent les mêmes éléments.

Pour illustrer une autre variante de chauffage de l'autoclave, on a représenté sous la référence 30 des tubes de circulation d'un liquide chaud entourant le récipient 2. A la place de tubes, le récipient pourrait posséder des parois doubles entre lesquelles on fait circuler un liquide chaud.

Cette installation utilise en tant que deuxième réacteur une colonne pulsée à plateaux 31 telle celle décrite dans le document FR-A-2 670 868.

Un compresseur 32, envoie de l'air, enrichi ou non en oxygène, éventuellement préchauffé et précomprimé, sous une pression par exemple égale à 50 bars, à un réservoir 33. Le tube 8 relie ce réservoir au dispositif 7 d'injection d'air dans l'autoclave 1. Un tube 34 relie le réservoir 33 à un autre compresseur 35 permettant d'augmenter la pression de l'air, par exemple à 200 bars, pour l'injecter dans le réacteur 31 grâce à un tube 36.

La pompe 37 permet, après ouverture de la vanne 20, de transférer le contenu liquide de l'autoclave 1 dans le réacteur 31. Elle permet également, par branchement d'une conduite annexe 38 sur la conduite 19 en aval de la vanne 20 de transférer dans le réacteur 31 des boues diverses contenues dans un réservoir 39.

Les gaz ayant réagi dans le réacteur 31 sont évacués finalement par la conduite 40 équipée d'une vanne 41 après passage sur un échangeur de chaleur 42 alimenté en eau pressurisée. L'eau sortant de l'échangeur de chaleur peut alimenter une turbine-alternateur 43 pour fournir du courant électrique à un dispositif d'utilisation 44.

Les gaz s'échappant par la conduite 40 peuvent être utilisés pour le fonctionnement du compresseur haute pression 35.

Une conduite 45, connectée au fond du réacteur 31 et équipée d'une vanne 46, permet d'évacuer l'eau usagée vers un égout.

L'autoclave 1 réalise la première étape d'oxydation par exemple à une température de 250°C, sous une pression de 50 bars et pendant une durée d'une heure. Ensuite, la composante liquide est transférée vers le réacteur pour y subir la seconde étape d'oxydation, par exemple à une température de 350°C, sous une pression de 200 bars et pendant une durée de 10 à 15 minutes. Le réacteur 31 peut être pourvu d'un catalyseur d'oxydation déposé sur un support solide. Ces conditions conduisent à la transformation de la totalité de la matière organique en gaz carbonique, sels minéraux et azote.

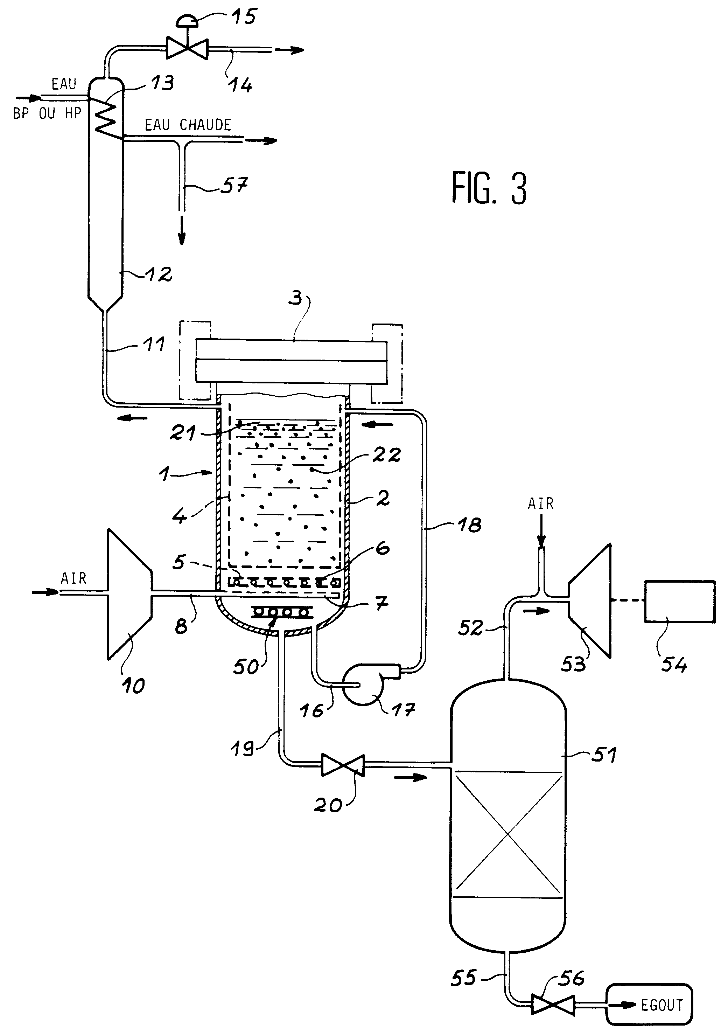

Dans l'installation représentée à la figure 3, l'oxydation se fait également en deux étapes dans des réacteurs différents. Le premier, constitué par l'autoclave décrit à la figure 1, fonctionne à température et pression modérées. Le second est un dispositif biologique connu, par exemple un digesteur produisant du biogaz lors de la destruction totale de la matière organique putrescible.

Dans la figure 3, les mêmes références qu'à la figure 1 représentent les mêmes éléments.

Pour illustrer encore une autre variante de chauffage de l'autoclave, on a représenté sous la référence 50 le dispositif de chauffage de l'autoclave 1 qui est immergé au fond du récipient 2. Ce dispositif 50 peut être une résistance chauffante ou un tube de circulation d'un fluide chaud.

Dans cet exemple, l'air insufflé dans l'autoclave est fourni par un seul compresseur 10 maintenant par exemple une pression de 50 bars dans l'autoclave. En maintenant la température à l'intérieur de l'autoclave à 250°C pendant une heure, on réalise la première étape du procédé d'oxydation.

La composante liquide est ensuite envoyée, par ouverture de la vanne 20, au digesteur 51. Il s'agit d'un digesteur mésophile, la température interne étant maintenue entre 50°C et 60°C. L'étape d'oxydation dans le digesteur dure environ une journée.

Le biogaz formé est évacué par la conduite 52. On peut l'utiliser immédiatement, en le mélangeant à de l'air, pour faire fonctionner une turbine-alternateur 53 fournissant du courant électrique à un dispositif d'utilisation 54.

L'eau usagée sort du digesteur par la conduite 55 équipée d'une vanne 56 et est dirigée vers un égout.

Une canalisation 57 connectée sur la canalisation d'eau chaude sortant de l'échangeur de chaleur 13 peut être utilisée pour assurer le chauffage du digesteur.

L'installation représentée à la figure 2 correspond plutôt au traitement de grandes quantités de déchets. On peut associer plusieurs autoclaves en parallèle pour réaliser la première étape d'oxydation en les faisant fonctionner successivement. On assure ainsi l'alimentation en continu du réacteur 31. Les installations représentées aux figures 1 et 3 sont bien adaptées au traitement de petites quantités de déchets.

Les effluents produits dans les autoclaves de plusieurs installations de traitement ne conduisant pas à la destruction totale des produits oxydables peuvent bien sûr être traités par un dispositif unique d'oxydation en voie humide à haute pression et haute température éloigné des autoclaves. Le transfert entre ces divers dispositifs peut être assuré par exemple par camion-citerne.

Au cours de la réaction, le gaz ayant réagi (air usé) entraîne de la vapeur d'eau qui, condensée au sommet d'une tour, sert au lavage des gaz de réaction. Le condenseur (échangeur thermique) sert de récupérateur de chaleur et ramène les gaz au voisinage de la température ambiante avant son échappement à travers un compresseur basse pression qui permet la récupération d'une partie de l'énergie de compression des gaz d'alimentaton de l'autoclave. L'eau recondensée lave le gaz à reflux en contre-courant dans la colonne de lavage qui peut être à garnissage, ou à plateaux, ou à cloches, etc.

Le couvercle de l'autoclave peut éventuellement être équipé d'un agitateur assurant le mélange d'une phase organique huileuse qui, sinon, tendrait à rester en surface. Une pompe prélève en continu du liquide en partie basse, à travers une crépine, et le rejette au-dessus du panier, au-dessus de l'interface liquide-gaz. Le panier, en retenant les déchets solides non oxydables ou non encore oxydés, contribue à la protection de la pompe équipée préférentiellement d'une crépine.

En fin d'opération, après refroidissement, on élimine mécaniquement les déchets solides contenus dans le panier. Ces solides sont avantageusement lavés par une partie de l'eau de la charge suivante de l'autoclave.

Les matières minérales en suspension fine dans le liquide peuvent être éliminées par décantation, filtration, ou toute autre technique. De même que les résidus solides précédents, les boues peuvent être lavées à l'eau afin d'éliminer la majeure partie de la pollution organique résiduelle adsorbée.

La solution, chargée de matières organiques, sauf dans l'hypothèse de dégradation totale en une seule étape dans une installation telle que schématisée à la figure 1, peut être traitée par un procédé biologique comme la méthanisation ou par une incinération en voie humide à haute température et haute pression, vers 350°C, en présence ou non de catalyseur déposé sur un support solide, dans un dispositif à alimentation continue ou semi-continue.

Cette technique aseptise et liquéfie la totalité des matières oxydables, donc permet le traitement de toute pollution organique. De plus, les solides résiduels, puisque débarrassés de toute la matière organique qui constituait une sorte de colle dans les déchets bruts, sont beaucoup plus facilement aptes à être triés, et ce tri, outre une valorisation éventuelle des fractions triées qui peut être envisagée, peut faciliter leur conditionnement comme déchets ultimes.

Cette technique peut s'appliquer au traitement des déchets de petites collectivités telles que ceux des hôpitaux, ceux de certaines industries, ceux des groupements de petites communes ou ceux de grosses agglomérations.

## Revendications

1. Autoclave (1) pour le traitement de déchets hétérogènes par oxydation en voie humide assistée par un catalyseur, l'autoclave comportant :
- un récipient (2) à fermeture hermétique pour réaliser sous pression une réaction d'oxydation,
- des moyens d'introduction des déchets dans le récipient,
- des moyens d'introduction d'un agent oxydant dans le récipient,
- des moyens de chauffage (23, 30, 50) du contenu du récipient,
- des moyens d'évacuation des gaz ayant réagi,
- des moyens de prélèvement de la composante liquide générée dans le récipient lors du traitement, caractérisé en ce que :
- les moyens d'introduction des déchets sont constitués par un panier amovible (4) de réception des déchets logeable dans la partie haute du récipient (2), le panier possédant une porosité permettant la rétention des produits solides inertes et des matières solides non oxydables et permettant le passage de la composante liquide,
- des moyens (5, 6) sont prévus dans le récipient pour y installer et y maintenir le catalyseur d'oxydation,
- les moyens d'introduction de l'agent oxydant sont situés dans la partie basse du récipient.

2. Autoclave selon la revendication 1, caractérisé en ce qu'il comprend en outre des moyens (16, 17, 18) permettant de réinjecter, en partie haute de l'autoclave, la composante liquide soutirée grâce auxdits moyens de prélèvement.

3. Autoclave selon l'une des revendications 1 ou 2, caractérisé en ce que le panier (4) est constitué d'un réseau maillé.

4. Autoclave selon l'une quelconque des revendications 1 à 3, caractérisé en ce que les moyens d'installation et de maintien du catalyseur sont constitués d'un support solide poreux (6) sur lequel est déposé le catalyseur, ce support étant disposé sous le panier.

5. Autoclave selon la revendication 4, caractérisé en ce que le support solide poreux (6) se présente sous forme de billes, de barres, de tubes ou de plaques.

6. Installation pour le traitement de déchets hétérogènes par oxydation en voie humide, caractérisée en ce qu'elle comprend :
- un autoclave (1) selon l'une quelconque des revendications 1 à 5,
- des moyens pour maintenir ladite pression dans le récipient.

7. Installation selon la revendication 6, caractérisée en ce qu'elle comprend un dispositif de lavage (12) des gaz ayant réagi, équipé d'un condenseur pour récupérer sous forme liquide la vapeur d'eau entraînée par ces gaz.

8. Installation selon la revendication 7, caractérisée en ce qu'un échangeur de chaleur (13) est associé au condenseur pour récupérer l'énergie thermique cédée au condenseur par la vapeur d'eau.

9. Installation selon l'une quelconque des revendications 6 à 8, caractérisée en ce que les moyens pour maintenir ladite pression comprennent au moins un compresseur (9, 10) permettant l'introduction de l'agent oxydant dans le récipient.

10. Installation selon l'une quelconque des revendications 6 à 9, caractérisée en ce que l'autoclave constitue le seul réacteur d'oxydation de l'installation, ce réacteur permettant de mener l'opération d'oxydation sous une température comprise entre 250°C et 300°C et sous une pression comprise entre 40 et 90 bars, les moyens de prélèvement comprenant des moyens de purge (19, 20) de l'autoclave pour rejeter la composante liquide.

11. Installation selon l'une quelconque des revendications 6 à 9, caractérisée en ce que l'autoclave (1), fonctionnant sous une température comprise entre 250°C et 300°C et sous une pression comprise entre 40 et 90 bars, constitue le premier réacteur d'oxydation de l'installation, les moyens de prélèvement permettant le transfert de la composante liquide vers un second réacteur (31), fonctionnant sous une température comprise entre 320°C et 370°C et sous une pression comprise entre 150 et 300 bars, permettant de compléter l'oxydation de la composante liquide.

12. Installation selon l'une quelconque des revendications 6 à 9, caractérisée en ce que l'autoclave (1), fonctionnant sous une température comprise entre 250°C et 300°C et sous une pression comprise entre 40 et 90 bars, constitue le premier réacteur d'oxydation de l'installation, les moyens de prélèvement permettant le transfert de la composante liquide vers un digesteur (51) permettant de compléter le traitement de la composante liquide.
